# EUROPEAN PATENT SPECIFICATION

(11) **EP 1 855 419 B1**
(45) Date of publication and mention of the grant of the patent: **21.10.2009**
(21) Application number: 07107144.3
(22) Date of filing: 27.04.2007
(51) Int. Cl.: H04L 12/28

(54) **Method for switching communication networks**
Verfahren zum Umschalten von Kommunikationsnetzwerken
Procédé pour la commutation des réseaux de communication

(30) Priority: 10.05.2006 CN 200610081936
(43) Date of publication of application: 14.11.2007
(73) Proprietor: HTC Corporation, Taoyuan County 330 (TW)
(72) Inventor: Wang, John C., Taoyuan Hsien (TW)
(74) Representative: Viering, Jentschura & Partner

(56) References cited:
- EP-A- 1 517 575
- EP-A1- 1 389 852
- US-A1- 2002 085 516

## Description

### Field of Invention

The present invention relates to a switching method for communication networks. More particularly, the present invention relates to a switching method between the different communication networks for data transmission of portable electronic devices.

### Description of Related Art

The portable electronic devices have undergone rapid development over the past few years, following advances in software and hardware which have resulted in electronic devices with multi-purpose functionalities. For example, the smart cell phone or the smart personal assistant product integrates the functionalities of the mobile telephone, digital camera and the digital personal assistant into one portable electronic device.

The characteristic of the foregoing portable electronic devices which perform a variety of the application programs similar to the personal computer system, is the ability to use the computer network system and the telephone network system concurrently for communication. The user can choose the communication method of the computer network or the telephone network according to his/her own needs to communicate with another user.

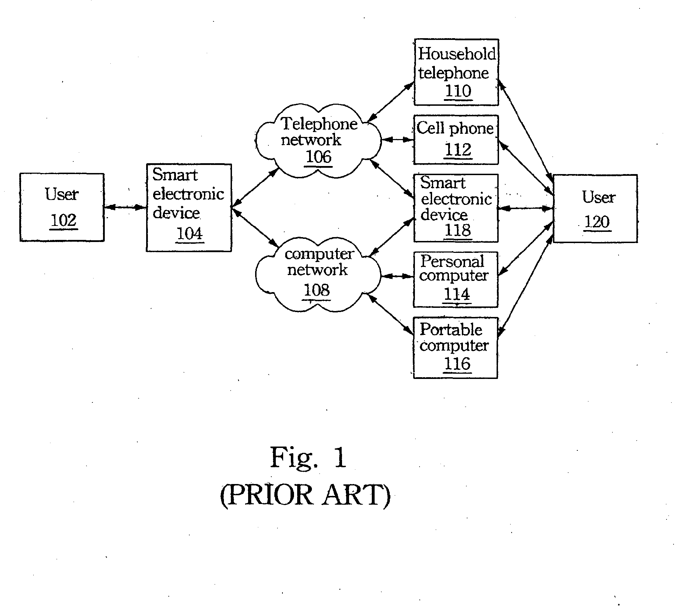

Fig. 1 is a schematic diagram illustrating the communication of the foregoing smart electronic device and other electronic devices. The user 102 uses a smart electronic device 104 to communicate with the user 120 and the smart electronic device 104 has the ability to communicate using the telephone network 106 and the computer network 108. Therefore, the user 102 can choose a suitable network system to communicate with the user 120 according to the device used by the user 120. For example, if the user 120 uses the conventional household telephone 110 or the cell phone 112, then the user 102 must choose the telephone network 106 to communicate with the user 120. If the user 120 uses the conventional personal computer 114, then the user 102 must choose the computer network 108 to communicate with the user 120. If the user 120 uses a smart electronic device 118, then the communication media between the user 102 and 120 can be either the telephone network 106 or the computer network 108.

The communication methods and their characteristics of the computer network and the telephone network are different. The advantage for transmitting data via the computer network is more cost-effective. Therefore, in normal conditions, especially when voice communication is used, the first choice for the user to communicate with another user is via the computer network. However, the telephone network range is far more extensive than the computer network and communication via the telephone network is currently more convenient. In the foregoing condition, for example, suppose the user 102 of Fig. 1 uses the smart electronic device 104 to talk to the user 120 on the move via the computer network 108. However, if the user 102 moves to an area not covered by the computer network 108, and then the communication link via the computer network 108 is disconnected. The user 102 must reconnect the smart electronic device 104 to the user 120 via the telephone network 106 in order to continue the voice communication.

Although the Unlicensed Mobile Access (UMA) technique can be implemented in order to solve the foregoing problem, the UMA technique relies on automatically maintaining the communication link on the telephone network or the computer network (in other words, switching between the communication network) to avoid establishing a new communication link. Therefore, the UMA requires an improvement for the entire infrastructure of the telephone network and the computer network, which requires a lot of capital cost and time. For practical uses, the UMA techniques still has a lot of areas that can improve.

Further prior art solutions are disclosed in documents EP 1 389 852 A1, EP 1 517 575 A2 and US 2002/0085516 A1

### SUMMARY

It is therefore an aspect of the present invention to provide a switching communication method for a portable electronic device.

It is another aspect of the present invention to provide a method to reduce the requirement for reestablishing the communication link for a portable electronic device.

It is still another aspect of the present invention to provide a method to fit in with the switching of the voice communication network according to the habit of the user.

The above objects are achieved by a method as defined in the appended claims.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a schematic diagram between the various electronic devices of the communication network;
Fig. 2 is a flowchart according to one embodiment of this invention;
Fig. 3 is a flowchart according to another embodiment of this invention; and
Fig. 4 is a flowchart according to still another embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

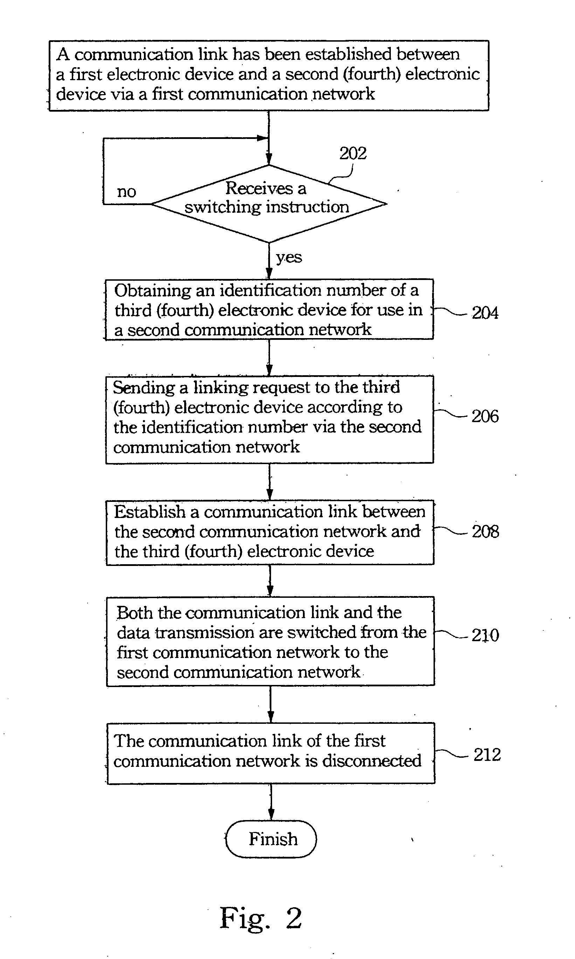

Fig. 2 illustrates a method flowchart according to one embodiment of the present invention. The method uses a first electronic device (similar to the smart electronic device 104 of Fig. 1), and the first electronic device is capable of connecting to at least a first communication network (similar to the computer network 108 of Fig. 1) and a second communication network (similar to the telephone network 106 of Fig. 1). A communication link and a data transmission (for example, voice communication) have been established between the first electronic device and a second electronic device (similar to the personal computer 114 or the portable computer 116 of Fig. 1) via the first communication network. Then, the method of the flowchart in Fig. 2 is applied to establish another communication link between the first electronic device and a third electronic device (similar to the household telephone 110 or the cell phone 112) via the second communication network. The unfinished data transmission originally communicates between the first electronic device and the second electronic device and is then transferred to the communication link between the first electronic device and the third electronic device in order to finish the data transmission.

If the first electronic device attempts to establish the communication link with the third electronic device via the second communication network, as shown in step 204, then the first electronic device must obtain an identification number for the third electronic device for use in the second communication network. For example, if the second communication network is a telephone network, then the identification number can be a telephone number; if the second communication network is a computer network, then the identification number is a network IP address, an email address or an account number for the communication software. In this embodiment, the first electronic device may obtain the identification number from either being manually input from the user or through looking the identification number up from the built-in telecommunication address book software.

The preferred step is the first electronic device only performs step 204 after receiving a switching instruction, which requires determining whether the first electronic device receives the switching instruction prior to obtaining the identification number. The switching instruction can be generated by a button or a hot key from the first electronic device (for example, the user of the first electronic device).

Step 206 shows the first electronic device sends a linking request to the third electronic device via the second communication network after the first electronic device obtains the identification number of the third electronic device for use in the second communication network. Step 208 shows a communication link is successfully established between the first electronic device and the third electronic device via the second communication network after the third electronic device accepts the linking request.

At the moment, the communication link between the first electronic device and the second electronic device may be disconnected due to various reasons (for example, the first electronic device is out of the cover range for the first communication network). Therefore, the unfinished data transmission (for example, the voice communication) between the first electronic device and the second electronic device is transferred to the communication link between the first electronic device and the third electronic device via the second communication network. In other words, in the voice communication condition, the user dialogue originally performed between the first electronic device and the second electronic device can be immediately transferred to the communication link between the first electronic device and the third electronic device. Step 212 shows the disconnection between the first electronic device and the second electronic device after the successful transferring the communication link and the data transmission.

In the foregoing method, suppose the second electronic device and the third electronic device are the common communication network terminal devices (for example, the household telephone, the cell phone, the personal computer or the portable computer). Supposed a fourth electronic device and the first electronic device have established the communication link in another embodiment of the present invention. The fourth electronic device is capable of connecting to at least the first communication network and the second communication network (similar to the smart electronic device 118 shown in Fig. 1). In other words, the communication link may be established between the first electronic device and the fourth electronic device via the first communication network or the second communication network.

Therefore, according to the steps of the Fig. 2, both the communication link and the data transmission are switched from the first communication network to the second communication network after the communication link is established between the first electronic device and the fourth electronic device via the first communication network. The main difference of another embodiment to the Fig. 2 is that an identification number of the fourth electronic device for use in the second communication network may be obtained through notifying the fourth electronic device, in addition to obtaining the identification number from being manually input by the user or the look up from the built-in communication address book software.

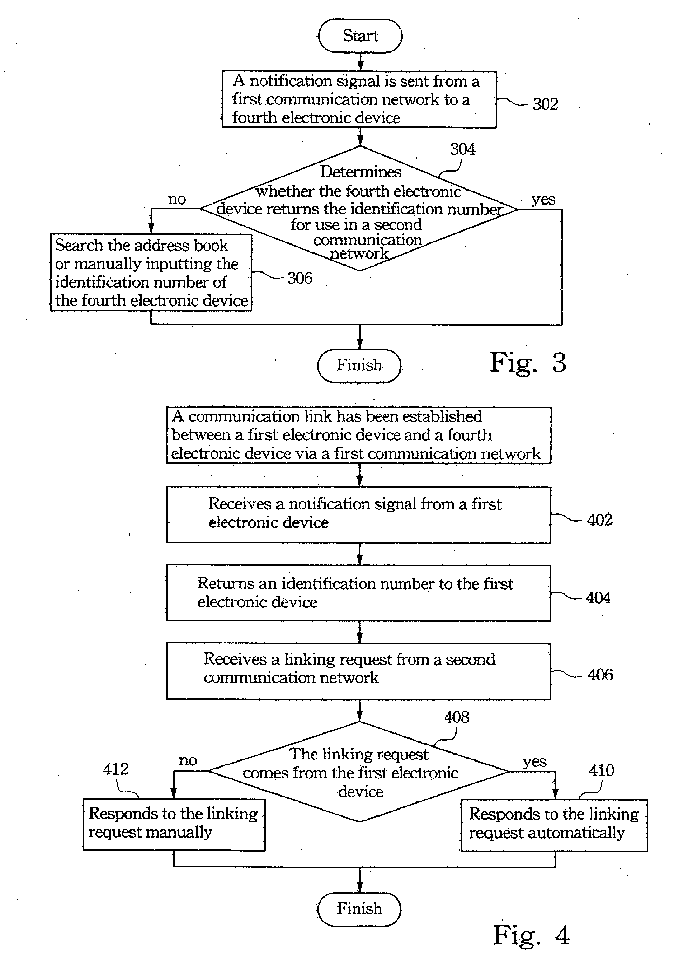

Fig. 3 illustrates a notification signal is sent from the first electronic device via the first communication network in step 302 in order to notify the fourth electronic device about the switching of the communication link in advance. Step 304, determines whether the fourth electronic device returns the identification number for use in the second communication network to the first electronic device. If the fourth electronic device returns the identification number, then the first electronic device successfully receives the identification number of the fourth electronic device. If the fourth electronic device does not return the identification number, then in step 306, for example, inputting by the user, or the look-up from the built-in communication address book software in order to obtain the identification number from the fourth electronic device.

In addition, the third electronic device is the common network communication terminal device and the user requires the manual operation of the third electronic device after receiving the linking request from the first electronic device illustrated in the method flowchart in Fig. 2. However, the fourth electronic device may have integrated the automatic response functionality to respond to the linking request in Fig. 4 to further increase the operating convenience.

The method flowchart of Fig. 3 illustrates the first electronic device sends a notification signal before the switching of the communication link. Therefore, the fourth electronic device receives the notification signal in step 402 of Fig. 4. The notification signal, for example, may include the identification number of the first electronic device for use in the second communication network. Then, the fourth electronic device returns its identification number for use in the second communication network to the first electronic device in step 404. The fourth electronic device receives a linking request from the second communication network in step 406. Then in step 408 to determine whether the identification number from the linking request is the same as the identification number of the first electronic device. If both the identification numbers are the same, then the linking request is from the first electronic device, which can respond to the linking request automatically in step 410. If both the identification numbers are different (step 412), then the linking request is not from the first electronic device, which requires the user to manually decide whether to respond to the linking request or to reject the linking request.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method for responding to a communication network used in a fourth electronic device (114), wherein both a first electronic device (104) and the fourth electronic device are capable of connecting to at least a first communication network (108) and a second communication network, (106) the method is performed when a communication link has been established between the first electronic device and the fourth electronic device via the first communication network, comprising the steps of:
obtaining a notification signal from the first electronic device (402), wherein the notification signal comprises an identification number of the first electronic device for use in the second communication network;
receiving a linking request from the second communication network (406); and
determining whether the linking request contains the identification number of the first electronic device, and responding to the linking request.

2. The method of claim 1, further comprises transmitting the identification number of the fourth electronic device for use in the second communication network to the first electronic device before receiving the linking request.

3. The method of claim 1, wherein the linking request comprises the identification number of the first electronic device, then the fourth electronic device can automatically respond to the linking request.

4. The method of claim 1, wherein if the linking request does not comprise the identification number of the first electronic device, then the fourth electronic device automatically rejects the linking request or a user manually decide whether to respond to the linking request.

5. The method of claim 1, wherein the first communication network is a computer network, the second communication network is a telephone network, and the identification number of the first electronic device is a telephone number, a network IP address, an email address or an account number of the telecommunication software.

6. The method of claim 2, wherein the identification number of the fourth electronic device is a telephone number, a network IP address, an email address or an account number of the telecommunication software.

7. The method of claim 1, wherein the first communication network is a computer network.

8. The method of claim 1, wherein the second communication network is a telephone network.

## Patentansprüche

1. Verfahren zum Antworten an ein Kommunikationsnetzwerk, welches in einem vierten elektronischen Gerät (114) verwendet wird, wobei sowohl ein erstes elektronisches Gerät (104) als auch das vierte elektronische Gerät in der Lage sind, eine Verbindung zu zumindest einem ersten Kommunikationsnetzwerk (108) und einem zweiten Kommunikationsnetzwerk (106) herzustellen, wobei das Verfahren ausgeführt wird, wenn eine Kommunikationsverbindung zwischen dem ersten elektronischen Gerät und dem vierten elektronischen Gerät über das erste Kommunikationsnetzwerk eingerichtet worden ist, wobei das Verfahren folgende Schritte aufweist:
Erhalten eines Benachrichtigungssignals von dem ersten elektronischen Gerät (402), wobei das Benachrichtigungssignal eine Identifikationsnummer des ersten elektronischen Geräts für die Verwendung in dem zweiten Kommunikationsnetzwerk aufweist;
Empfangen einer Verbindungsanfrage von dem zweiten Kommunikationsnetzwerk (406); und
Ermitteln, ob die Verbindungsanfrage die Identifikationsnummer des ersten elektronischen Geräts aufweist, und Antworten auf die Verbindungsanfrage.

2. Verfahren gemäß Anspruch 1, welches ferner ein Übertragen der Identifikationsnummer des vierten elektronischen Geräts für die Verwendung in dem zweiten Kommunikationsnetzwerk zu dem ersten elektronischen Gerät vor dem Empfangen der Verbindungsanfrage aufweist.

3. Verfahren gemäß Anspruch 1, wobei das vierte elektronische Gerät dann automatisch auf die Verbindungsanfrage antworten kann, wenn die Verbindungsanfrage die Identifikationsnummer des ersten elektronischen Geräts aufweist.

4. Verfahren gemäß Anspruch 1, wobei das vierte elektronische Gerät dann automatisch die Verbindungsanfrage zurückweist oder ein Benutzer manuell entscheidet, ob auf die Verbindungsanfrage geantwortet werden soll, wenn die Verbindungsanfrage nicht die Identifikationsnummer des ersten elektronischen Geräts aufweist.

5. Verfahren gemäß Anspruch 1, wobei das erste Kommunikationsnetzwerk ein Computernetzwerk ist, das zweite Kommunikationsnetzwerk ein Telefonnetzwerk ist und die Identifikationsnummer des ersten Geräts eine Telefonnummer, eine IP-Netzwerkadresse, eine Email-Adresse oder eine Kontonummer der Telekommunikationssoftware ist.

6. Verfahren gemäß Anspruch 2, wobei die Identifikationsnummer des vierten elektronischen Geräts eine Telefonnummer, eine IP-Netzwerkadresse, eine Email-Adresse oder eine Kontonummer der Telekommunikationssoftware ist.

7. Verfahren gemäß Anspruch 1, wobei das erste Kommunikationsnetzwerk ein Computernetzwerk ist.

8. Verfahren gemäß Anspruch 1, wobei das zweite Kommunikationsnetzwerk ein Telefonnetzwerk ist.

## Revendications

1. Procédé destiné à répondre à un réseau de communication utilisé dans un quatrième dispositif électronique (114) dans lequel un premier dispositif électronique (104) et le quatrième dispositif électronique sont capables de se connecter au moins à un premier réseau de communication (108) et à un deuxième réseau de communication (106), le procédé étant exécuté quand une liaison de communication a été établie entre le premier dispositif électronique et le quatrième dispositif électronique par l'intermédiaire du premier réseau de communication, comprenant les étapes consistant à :
obtenir un signal de notification en provenance du premier dispositif électronique (402), dans lequel le signal de notification comprend un numéro d'identification du premier dispositif électronique destiné à être utilisé dans le deuxième réseau de communication ;
recevoir une demande de liaison en provenance du deuxième réseau de communication (406) ; et
déterminer si la demande de liaison contient le numéro d'identification du premier dispositif électronique, et répondre à la demande de liaison.

2. Procédé selon la revendication 1, comprenant en outre l'étape consistant à transmettre le numéro d'identification du quatrième appareil électronique destiné à être utilisé dans le deuxième réseau de communication, au premier dispositif électronique avant de recevoir la demande de liaison.

3. Procédé selon la revendication 1, dans lequel, la demande de liaison comprend le numéro d'identification du premier dispositif électronique, alors le quatrième dispositif électronique peut répondre de manière automatique à la demande de liaison.

4. Procédé selon la revendication 1, dans lequel si la demande de liaison ne comprend pas le numéro d'identification du premier dispositif électronique, alors le quatrième dispositif électronique rejette de manière automatique la demande de liaison ou un utilisateur décide de manière manuelle s'il convient de répondre ou pas à la demande de liaison.

5. Procédé selon la revendication 1, dans lequel le premier réseau de communication est un réseau informatique, le deuxième réseau de communication est un réseau téléphonique, et le numéro d'identification du premier dispositif électronique est un numéro de téléphone, une adresse IP de réseau, une adresse électronique ou un numéro de compte du logiciel de télécommunication.

6. Procédé selon la revendication 2, dans lequel le numéro d'identification du quatrième dispositif électronique est un numéro de téléphone, une adresse IP de réseau, une adresse électronique ou un numéro de compte du logiciel de télécommunication.

7. Procédé selon la revendication 1, dans lequel le premier réseau de communication est un réseau informatique.

8. Procédé selon la revendication 1, dans lequel le deuxième réseau de communication est un réseau téléphonique.
